# EUROPÄISCHE PATENTANMELDUNG

(11) **EP 4 506 192 A1**
(43) Veröffentlichungstag der Anmeldung: **12.02.2025**
(21) Anmeldenummer: 24190346.7
(22) Anmeldetag: 23.07.2024
(51) Int. Cl.: B60H 1/00

(54) **VERFAHREN UND TEMPERIERSYSTEM ZUM TEMPERIEREN EINER ANTRIEBSEINHEIT UND EINER BATTERIE EINES ZUMINDEST TEILWEISE ELEKTRISCH ANTREIBBAREN FAHRZEUGS**

(30) Priorität: 08.08.2023 DE 102023207618
(71) Anmelder: Robert Bosch GmbH, 70442 Stuttgart (DE)
(72) Erfinder: Lassacher, Bernhard, 2485 Wimpassing an der Leitha (AT)

(57) **Zusammenfassung**

Die Erfindung betrifft ein Verfahren (200) zum Temperieren einer Antriebseinheit (120) und einer Batterie (110) eines zumindest teilweise elektrisch antreibbaren Fahrzeugs unter Verwendung eines Temperiersystems (100), das einen ersten Temperiermedienkreislauf, der die Antriebseinheit (120) umfasst, und einen zweiten Temperiermedienkreislauf, der die Batterie (110) umfasst, aufweist, wobei der erste und der zweite Temperiermedienkreislauf miteinander zu einem gemeinsamen Temperiermedienkreislauf (12) koppelbar sind, wobei das Verfahren umfasst: ein Ermitteln eines ersten Temperierbedarfs bezüglich der Antriebseinheit (120), ein Ermitteln eines zweiten Temperierbedarfs bezüglich der Batterie (110), ein Vergleichen des ersten Temperierbedarfs mit dem zweiten Temperierbedarf, und ein Koppeln des ersten Temperiermedienkreislauf mit dem zweiten Temperiermedienkreislauf , um den gemeinsamen Temperiermedienkreislauf (12) zu bilden, in Abhängigkeit von einem Ergebnis des Vergleichs. Ferner werden ein entsprechendes Temperiersystem (100) sowie eine Recheneinheit und ein Computerprogramm zur Durchführung eines solchen Verfahrens vorgeschlagen.

## Beschreibung

Die vorliegende Erfindung betrifft ein Verfahren zum Temperieren einer Antriebseinheit und einer Batterie eines zumindest teilweise elektrisch antreibbaren Fahrzeugs sowie eine Recheneinheit und ein Computerprogramm zu dessen Durchführung und ein entsprechendes Temperiersystem.

### Hintergrund der Erfindung

Batterien, insbesondere Fahrbatterien, von (teil-)elektrisch angetriebenen Fahrzeugen, wie z.B. batterieelektrischen Fahrzeugen (engl. battery electric vehicle, BEV) oder Hybridfahrzeugen, basieren häufig auf Lithium-Ionen-Zellen, die zum Betrieb in einem, insbesondere vom jeweiligen Betriebsmodus abhängigen, Temperaturfenster betrieben werden sollten, um die Zellen nicht durch Überspannung bzw. Überstrom zu schädigen. Dazu können dedizierte elektrische Heizelemente verwendet werden, um die Batterie auf eine minimale Betriebstemperatur anzuwärmen. Außerdem kann die Batterie in ein Kühlsystem, das beispielsweise auch den Antriebsstrang des Fahrzeugs kühlt, integriert werden, um eine Maximaltemperatur nicht zu überschreiten.

### Offenbarung der Erfindung

Erfindungsgemäß werden ein Verfahren zum Temperieren einer Antriebseinheit und einer Batterie eines zumindest teilweise elektrisch antreibbaren Fahrzeugs sowie eine Recheneinheit und ein Computerprogramm zu dessen Durchführung und ein entsprechendes Temperiersystem mit den Merkmalen der unabhängigen Patentansprüche vorgeschlagen. Vorteilhafte Ausgestaltungen sind Gegenstand der Unteransprüche sowie der nachfolgenden Beschreibung.

Die Antriebseinheit umfasst zumindest eine elektrische Maschine, die zum Antrieb des Fahrzeugs genutzt wird, Leistungselektronik zur Bestromung der elektrischen Maschine(n) und ggf. weitere Komponenten (z.B. ein Getriebe). Im Falle eines Hybridfahrzeugs kann darüber hinaus auch eine Brennkraftmaschine von der Antriebseinheit umfasst sein.

Die Erfindung bedient sich eines Temperiersystems, das einen ersten Temperiermedienkreislauf, der die Antriebseinheit umfasst, und einen zweiten Temperiermedienkreislauf, der die Batterie umfasst, aufweist. Der erste und zweite Temperiermedienkreislauf sind miteinander zu einem gemeinsamen Temperiermedienkreislauf koppelbar. Damit kann Abwärme aus der Antriebseinheit zum Beheizen der Batterie verwendet werden und ebenso, in einem Fall, in dem die Batterie der Kühlung bedarf, kann ein Kühler des ersten Temperiermedienkreislaufs, der in einem Normalbetriebsmodus zum Abführen von Wärme aus der Antriebseinheit an die Umgebungsatmosphäre dient (z.B. ein Wärmetauscher, der einen thermischen Austausch zwischen dem ersten Temperiermedienkreislauf und der das Fahrzeug umgebenden Atmosphäre ermöglicht), dazu verwendet werden, Wärme aus der Batterie abzuführen. Beispielsweise kann dies besonders in Betriebsmodi vorteilhaft sein, in denen die Antriebseinheit nur wenig oder gar keine Abwärme produziert, beispielsweise im Rahmen eines Schnellademodus. Insgesamt kann dadurch die Effizienz des Temperiersystems gesteigert werden, da jeweils die Temperiermaßnahmen realisiert werden können, die mit minimalem Energieaufwand die jeweils zu bewerkstelligende Temperieraufgabe erledigen. So kann insbesondere in einigen Betriebsmodi auf den Einsatz eines Kältemittelkompressors zum Abführen von überschüssiger Wärme aus der Batterie verzichtet werden. Ferner kann in einigen Betriebsmodi, in denen die Antriebseinheit genügend Abwärme produziert, auf den Einsatz eines ggf. vorgesehenen Heizelements zum Beheizen der Batterie verzichtet werden.

Im Einzelnen umfasst das erfindungsgemäße Verfahren ein Ermitteln eines ersten Temperierbedarfs bezüglich der Antriebseinheit, ein Ermitteln eines zweiten Temperierbedarfs bezüglich der Batterie, ein Vergleichen des ersten Temperierbedarfs mit dem zweiten Temperierbedarf und ein Koppeln des ersten Tempriermedienkreislauf mit dem zweiten Temperiermedienkreislauf, um den gemeinsamen Temperiermedienkreislauf zu bilden, in Abhängigkeit von einem Ergebnis des Vergleichs. Somit können die beiden Temperiermedienkreisläufe insbesondere dann verbunden werden, wenn es energetisch sinnvoll ist, jedoch voneinander getrennt bleiben, wenn sich die Temperierbedarfe nicht zumindest teilweise gegenseitig kompensieren. Mit anderen Worten, wenn die Antriebseinheit gekühlt werden muss, die Batterie hingegen geheizt, ist es sinnvoll, die beiden Temperiermedienkreisläufe miteinander zu verbinden, um andere Wärmequellen, die andernfalls zur Beheizung der Batterie verwendet würden, zu entlasten. Ebenso ist es vorteilhaft, wenn die Batterie gekühlt werden muss und die Temperatur der Antriebseinheit niedrig genug ist, so dass das die Antriebseinheit verlassende Temperiermedium noch Wärme aus der Batterie aufnehmen kann, die beiden Temperiermedienkreisläufe gekoppelt zu betreiben, da so Wärmesenken, die andernfalls zur Kühlung der Batterie verwendet würden, entlastet werden.

In zumindest einer Ausgestaltung umfasst das Vergleichen ein Ermitteln, ob der zweite Temperierbedarf zumindest teilweise unter zumindest teilweiser Bedienung des ersten Temperierbedarfs bedient werden kann. Somit kann auf Basis des Vergleichs festgestellt werden, ob sich durch das Koppeln der beiden Temperiermedienkreisläufe ein Synergieeffekt ergibt.

Insbesondere kann der zweite Temperierbedarf auf Basis einer aktuellen Temperatur der Batterie und/oder auf Basis einer zur Erreichung einer Zieltemperatur der Batterie durch die Batterie aufzunehmenden oder abzugebenden erforderlichen Wärmemenge ermittelt werden. Alternativ oder zusätzlich kann der erste Temperierbedarf auf Basis einer aktuellen Temperatur der Antriebseinheit und/oder auf Basis einer zur Erreichung einer Zieltemperatur der Antriebseinheit durch die Antriebseinheit aufzunehmenden oder abzugebenden erforderlichen Wärmemenge ermittelt werden. Damit kann präzise ermittelt werden, inwieweit die beiden Temperiermedienkreisläufe in einem aktuellen Betriebszustand miteinander gekoppelt werden können bzw. sollten, um Synergieeffekte nutzbar zu machen. Insbesondere kann dabei vorgesehen sein, den ersten Temperiermedienkreislauf zunächst an die Temperatur des zweiten Temperiermedienkreislaufs anzupassen, bevor die beiden Temperiermedienkreisläufe miteinander gekoppelt werden. Andererseits können die Temperiermedienkreisläufe (wieder) voneinander separiert werden, wenn die Temperierbedarfe nicht (mehr) zueinander passen. Beispielsweise kann die Antriebseinheit während des Betriebs eine Temperatur erreichen, die oberhalb der von der Batterie tolerierbaren Temperatur liegt und daher würde bei einem weiteren Betrieb des gemeinsamen Temperiermedienkreislaufs ein erhöhter Kühlungsbedarf entstehen, um das Temperiermedium vor dessen Eintritt in die Batterie (z.B. unter Verwendung des erwähnten Kältemittelkompressors und einen entsprechenden Wärmetauscher) auf ein tolerables Temperaturniveau herunterzukühlen. Werden die Temperiermedienkreisläufe in einer solchen Situation hingegen getrennt voneinander betrieben, kann der Temperieraufwand insgesamt gesenkt werden.

In zumindest einer Ausgestaltung umfasst der erste Temperiermedienkreislauf einen ersten Wärmetauscher zum thermischen Austausch zwischen dem ersten Temperiermedienkreislauf und einer das Fahrzeug umgebenden Atmosphäre. Somit kann die Antriebseinheit (auch) unabhängig von der Batterie bzw. weiteren Komponenten des zweiten Temperiermedienkreislaufs temperiert werden, sofern dies erforderlich ist. Zudem kann, im gekoppelten Zustand der beiden Temperiermedienkreisläufe, der erste Wärmetauscher auch zum Temperieren der Batterie verwendet werden. Insgesamt ergibt sich damit im Vergleich zu herkömmlichen Lösungen eine höhere Flexibilität in der Verteilung der thermischen Last der anfallenden Temperieraufgaben.

In zumindest einer Ausgestaltung umfasst der zweite Temperiermedienkreislauf einen zweiten Wärmetauscher zum thermischen Austausch zwischen dem zweiten Temperiermedienkreislauf und einem Kältemittelkreislauf, wobei das Verfahren ferner ein Betreiben des Kältemittelkreislaufs zum Temperieren eines Fahrgastraums des Fahrzeugs umfasst. Damit kann der Fahrgastraum und/oder ggf. weitere Komponenten des Kältemittelkreislaufs als Wärmesenke und/oder Wärmequelle zum Temperieren der Batterie verwendet werden.

In zumindest einer Ausgestaltung umfasst das Verfahren ein Ermitteln einer Differenz zwischen einer aktuellen Temperatur des ersten Temperiermedienkreislaufs und einer aktuellen Temperatur des zweiten Temperiermedienkreislaufs, und ein Vergleichen der Differenz mit einem Differenzschwellwert. Das Koppeln des ersten mit dem zweiten Temperiermedienkreislauf wird dabei (insbesondere nur dann) durchgeführt, wenn die Differenz kleiner als der Differenzschwellwert ist. Damit kann sichergestellt werden, dass keine übermäßigen Temperaturdifferenzen auf die Batterie einwirken, wodurch diese vor Beschädigung geschützt wird.

In zumindest einer Ausgestaltung umfasst das Verfahren dabei ferner ein Steuern des ersten Temperiermedienkreislaufs zum Angleichen von dessen aktueller Temperatur an die aktuelle Temperatur des zweiten Temperiermedienkreislaufs, wenn die Differenz größer als oder gleich groß wie der Differenzschwellwert ist. Damit kann das Koppeln der beiden Temperiermedienkreisläufe vorbereitet werden, auch wenn die Temperaturdifferenz als zu hoch ermittelt wurde.

Insbesondere kann das Verfahren dabei zusätzlich, nach dem Steuern des ersten Temperiermedienkreislaufs zum Angleichen von dessen aktueller Temperatur, ein Überprüfen, ob die Differenz sich auf einen Wert unterhalb des Differenzschwellwerts verringert hat, und ein Durchführen einer Maßnahme in Abhängigkeit von einem Ergebnis des Überprüfens umfassen. Dadurch kann die Wirksamkeit der Vorbereitung des Koppelns abgeschätzt und ggf. entsprechend reagiert werden. Als Maßnahme kommt dabei insbesondere das Koppeln der beiden Temperiermedienkreisläufe, wenn sich die Differenz ausreichend verringert hat, in Betracht. Eine weitere mögliche Maßnahme ist ein Sperren des Koppelns (bzw. des Verfahrens insgesamt), insbesondere für eine vorbestimmbare Zeitdauer (Sperrdauer), die beispielsweise von der ermittelten Differenz abhängen kann. Somit kann die für das Verfahren erforderliche Rechenleistung begrenzt werden, da bei nicht erfolgreicher Temperaturangleichung dementsprechend ein Entprellmechanismus etabliert wird.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Das erfindungsgemäße Temperiersystem ist zum Temperieren der Antriebseinheit und der Batterie des zumindest teilweise elektrisch antreibbaren Fahrzeugs eingerichtet und umfasst, wie bereits eingangs erwähnt, einen ersten Temperiermedienkreislauf und einen zweiten Temperiermedienkreislauf. Der erste Temperiermedienkreislauf umfasst einen ersten Wärmetauscher zum thermischen Austausch zwischen dem ersten Temperiermedienkreislauf und einer das Fahrzeug umgebenden Atmosphäre. Der zweite Temperiermedienkreislauf umfasst die Batterie und einen zweiten Wärmetauscher zum Abführen von Wärme aus dem zweiten Temperiermedienkreislauf. Der erste Temperiermedienkreislauf ist mit dem zweiten Temperiermedienkreislauf koppelbar, um einen gemeinsamen Temperiermedienkreislauf zu bilden. Damit ist das Temperiersystem im Wesentlichen dazu eingerichtet, das bereits erläuterte erfindungsgemäße Verfahren durchzuführen und profitiert daher von dessen Vorteilen in analoger Weise.

In zumindest einer Ausgestaltung umfasst das Temperiersystem zwei Vierwegeventile, mittels derer der erste und der zweite Temperiermedienkreislauf miteinander zu dem gemeinsamen Temperiermedienkreislauf koppelbar sind. Dies sind auf dem Markt gut verfügbare Komponenten, die die erwünschte Aufgabe gut erfüllen. Es sei an dieser Stelle betont, dass auch andere Mehrwegeventile zur Kopplung des ersten Temperiermedienkreislaufs mit dem zweiten Temperiermedienkreislauf verwendet werden können und in alternativen Ausgestaltungen der Erfindung auch vorgesehen sind.

Vorteilhafterweise ist das Temperiersystem dazu eingerichtet eine oder mehrere der hier beschriebenen Varianten des erfindungsgemäßen Verfahrens durchzuführen. Insbesondere kann das Temperiersystem zu diesem Zweck eine erfindungsgemäße Recheneinheit umfassen.

Ein Fahrzeug, das eine Ausgestaltung eines erfindungsgemäßen Temperiersystems umfasst, ist ebenso vorteilhaft und stellt einen weiteren Aspekt der Erfindung dar.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

Figur 1 zeigt schematisch ein Temperiersystem gemäß einer Ausgestaltung der Erfindung in einem ersten Betriebsmodus.
Figur 2 zeigt das Temperiersystem aus Figur 1 in einem zweiten Betriebsmodus.
Figur 3 zeigt das Temperiersystem aus Figur 1 in einem dritten Betriebsmodus.
Figur 4 veranschaulicht eine Ausgestaltung eines erfindungsgemäßen Verfahrens anhand eines vereinfachten Ablaufdiagramms.

### Ausführungsform(en) der Erfindung

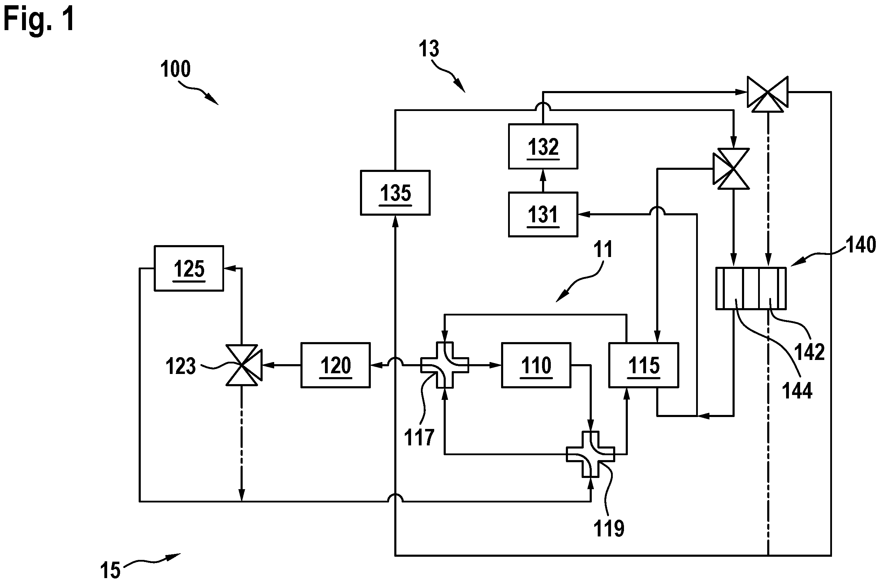

In den Figuren 1 bis 3 ist jeweils die gleiche Ausgestaltung eines erfindungsgemäßen Temperiersystems in jeweils unterschiedlichen Betriebsmodi schematisch dargestellt und insgesamt mit 100 bezeichnet. Dabei sind in dem jeweiligen Betriebsmodus aktive Medienführungen als durchgezogene Pfeile dargestellt. Vorhandene, jedoch in dem jeweils gezeigten Betriebsmodus nicht durchströmte, also inaktive Leitungen sind jeweils mit Linien der Form Strich-Punkt-Punkt dargestellt.

Das Temperiersystem 100 umfasst einen ersten Temperiermedienkreislauf 15, der ein erstes Temperiermedium, das beispielsweise wasserbasiert sein kann und insbesondere ein Gefrierschutzmittel, beispielsweise ein organisches oder anorganisches Salz und/oder eine oder mehrere organische und/oder anorganische polare chemische Verbindungen, umfassen kann, umfasst. Beispielsweise können als Gefrierschutzmittel Glycerin, Ethanol, Ethylenglycol, Propylenglycol, Silicate und/oder Phosphate eingesetzt werden. Alternativ kann das erste Temperiermedium auch ölbasiert sein, wobei insbesondere ein dielektrisches Fluid als das erste Temperiermedium verwendet werden kann, das typischerweise im Vergleich zu wasserbasierten Temperiermedien eine geringere elektrische Leitfähigkeit aufweist und damit einen Vorteil in Bezug auf die Betriebssicherheit bietet. Zudem sind ölbasierte Temperiermedien in der Regel nicht korrosiv, so dass auf Additive zum Korrosionsschutz verzichtet werden kann.

Der erste Temperiermedienkreislauf 15 umfasst einen ersten Wärmetauscher 125, der dazu eingerichtet ist, Wärme zwischen dem ersten Temperiermedium und einer das Fahrzeug umgebenden Atmosphäre zu übertragen, und zumindest eine zum Antrieb des Fahrzeugs eingerichtete elektrische Antriebseinheit 120, die zumindest eine elektrische Maschine und Leistungselektronik, wie bspw. einen Inverter, und optional ein Getriebe umfasst.

Grundsätzlich sind in dem in den Figuren dargestellten Temperiersystem 100 der erste Temperiermedienkreislauf 15 mit einem zweiten Temperiermedienkreislauf 11 zu einem gemeinsamen Temperiermedienkreislauf 12 zusammenschaltbar. Dafür sind in dem hier gezeigten Beispiel zwei Vier-Wege-Ventile 117, 119 vorgesehen. Es sei an dieser Stelle jedoch betont, dass ggf. auch andere Möglichkeiten der Zusammenschaltung (und damit auch Aufteilung) des ersten 15 und zweiten 11 Temperiermedienkreislaufs in alternativen Ausgestaltungen der Erfindung verwendet werden können.

Der zweite Temperiermedienkreislauf 11 bzw. der gemeinsame Temperiermedienkreislauf 12 ist über einen zweiten Wärmetauscher 115 mit einem Kältemittelkreislauf 13 thermisch gekoppelt.

Der Kältemittelkreislauf 13 enthält ein Kältemittel und umfasst einen Kompressor 132 zur Verdichtung des Kältemittels, den zweiten Wärmetauscher 115, der zur Übertragung von Wärme zwischen dem zweiten 11 bzw. gemeinsamen 12 Temperiermedienkreislauf und dem Kältemittelkreislauf 13 stromauf des Kompressors 132 eingerichtet ist, und einen dritten Wärmetauscher 135, der zur Übertragung von Wärme aus dem verdichteten Kältemittel auf die das Fahrzeug umgebende Atmosphäre eingerichtet ist. Ferner umfasst der Kältemittelkreislauf 13 einen ersten Kabinenwärmetauscher 142 und einen zweiten Kabinenwärmetauscher 144 zur Übertragung von Wärme aus dem Kältemittelkreislauf auf den Fahrgastraum 140 (erster Kabinenwärmetauscher 142) bzw. zur Aufnahme von Wärme aus dem Fahrgastraum 140 (zweiter Kabinenwärmetauscher 144). Das Kältemittel kann ggf. stromab der Verdichtung (also druckseitig des Kompressors 132) teilweise oder vollständig kondensieren und in einem zur Wärmeaufnahme eingerichteten Wärmetauscher saugseitig des Kompressors 132 (wieder) verdampfen. Dadurch können sehr unterschiedliche Temperaturniveaus eingestellt werden, was das Temperiersystem 100 insgesamt sehr flexibel einsetzbar macht. Als Kältemittel des Kältemittelkreislaufs 13 kann zum Beispiel Propan (R290) und/oder Kohlenstoffdioxid, CO₂ (R744) verwendet werden. Das Kältemittel kann in einem Reservoir 131 saugseitig des Kompressors vorgehalten werden. Das Reservoir 131 kann auch als Sammelpunkt für zum Kompressor 132 zurückströmende Kältemittelströme verwendet werden.

Es sei hier betont, dass der Kältemittelkreislauf 13 nicht in jedem Fall direkt mit dem Fahrgastraum 140 in Verbindung stehen muss. Vielmehr kann in einigen Ausgestaltungen auch vorgesehen sein, Wärme zwischen dem Kältemittelkreislauf 13 und einem weiteren Temperiermedienkreislauf, der zur Temperierung des Fahrgastraums 140 eingerichtet ist (in den Figuren nicht dargestellt), zu übertragen. Dies kann beispielsweise aus Sicherheitsgründen und/oder zur besseren Steuerbarkeit vorteilhaft sein.

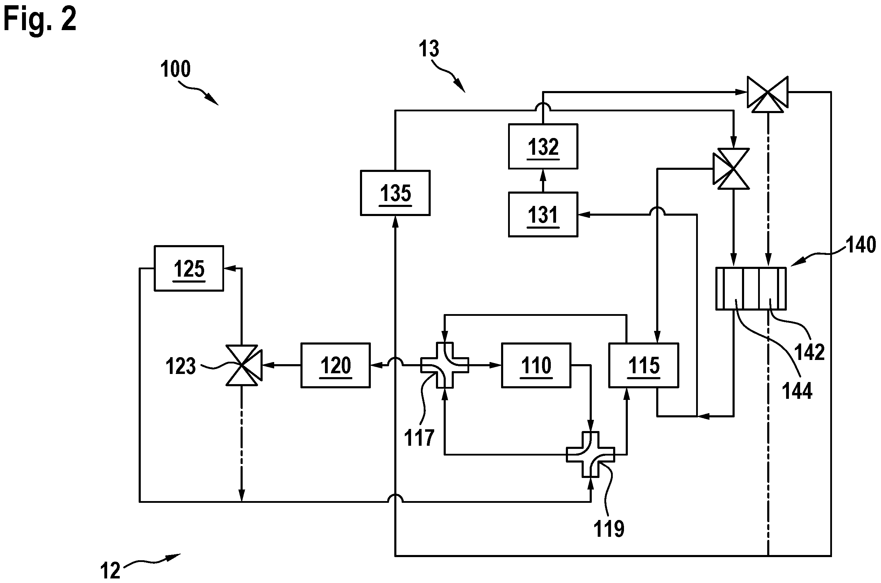

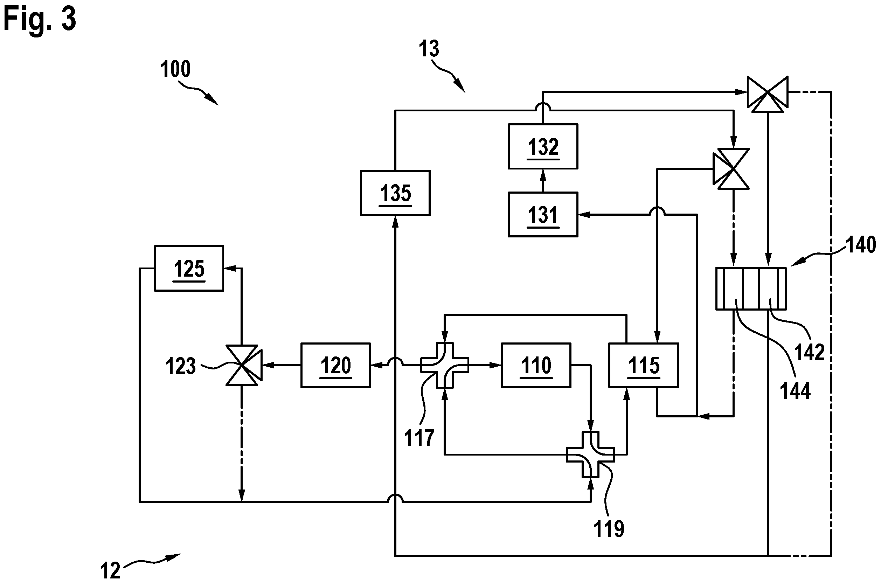

Der zweite Temperiermedienkreislauf 11 umfasst eine zu temperierende Batterie, beispielsweise eine Fahrbatterie 110 des Fahrzeugs, und den bereits erläuterten zweiten Wärmetauscher 115. Wenn der erste Temperiermedienkreislauf 15 und zweite Temperiermedienkreislauf 11 zu dem gemeinsamen Temperiermedienkreislauf 12 zusammengeschaltet sind (siehe Figur 2, Figur 3), sind alle hier als einem der beiden Temperiermedienkreisläufe 15, 11 angehörig beschriebenen Komponenten von dem gemeinsamen Temperiermedienkreislauf 12 umfasst. Mit anderen Worten wird in den gezeigten Beispielen durch die Vier-Wege-Ventile 117, 119 zwar die relative Zuordnung der Komponenten und insbesondere die Reihenfolge von deren Durchströmung durch das jeweilige Temperiermedium geändert, jedoch wird keine der Komponenten aus den Temperiermedienkreisläufen 15, 11, 12 ausgeschlossen.

In Figur 1 ist ein erster Betriebsmodus dargestellt, in dem der erste Temperiermedienkreislauf 15 und der zweite Temperiermedienkreislauf 11 getrennt betrieben werden. Dabei ist die Batterie 110 in dem zweiten Temperiermedienkreislauf thermisch mittels des zweiten Wärmetauschers 115 mit dem Kältemittelkreislauf 15 verbunden und kann so mittels des Kompressors 132 und des dritten Wärmetauschers 135 temperiert werden. Die Antriebseinheit 120 wird in diesem Betriebsmodus unter Verwendung des ersten Wärmetauschers 125 temperiert, insbesondere gekühlt. Die thermische Leistung des ersten Temperiermedienkreislaufs 15 kann insbesondere durch Aufteilung des Temperiermedienstroms auf einen Teilstrom, der den ersten Wärmetauscher 125 durchströmt, und einen zweiten Teilstrom, der den ersten Wärmetauscher 125 umgeht, eingestellt werden. Zu diesem Zweck ist in dem Temperiersystem 100 ein Dreiwegeventil 123 vorgesehen, das, insbesondere stufenlos, zwischen 100 % Umgehung des ersten Wärmetauschers 125 und 0 % Umgehung des ersten Wärmetauschers 125, ansteuerbar ist. Auch im Falle des Dreiwegeventils 123 können in Alternativen Ausgestaltungen der Erfindung andere Ventilkonfigurationen verwendet werden. Die Erfindung ist nicht auf die Verwendung speziell eines Dreiwegeventils beschränkt. Auch eine Integration des hier dargestellten Dreiwegeventils 123 in eines der hier dargestellten Vierwegeventile 117, 119 (die, wie bereits erwähnt ebenfalls anders ausgestaltet sein können) ist in Ausgestaltungen der Erfindung vorgesehen. In einem solchen Falle könnte beispielsweise anstatt des Dreiwegeventils 123 und eines der Vierwegeventile 117, 119 ein Fünfwegeventil verwendet werden oder alle Ventile der Temperiermedienkreisläufe könnten ggf. auch zu einem einzigen Siebenwegeventil zusammengefasst werden.

In Figur 2 ist ein zweiter Betriebsmodus des Temperiersystems 100 gezeigt. In dem zweiten Betriebsmodus sind der erste Temperiermedienkreislauf 15 und der zweite Temperiermedienkreislauf 11 zu dem gemeinsamen Temperiermedienkreislauf 12 zusammengeschaltet. Dazu wurde im Vergleich zu dem ersten Betriebsmodus (siehe Figur 1) das Vier-Wege-Ventil 119 umgeschaltet, so dass sich folgende Verschaltungsreihenfolge ergibt: Antriebseinheit 120 → optional bzw. teilweise umgangener erster Wärmetauscher 125 → zweiter Wärmetauscher 115 → Batterie 110 → Antriebseinheit 120. Dabei kann mittels des ersten Wärmetauschers ein Großteil der Abwärme der Antriebseinheit 120 aus dem Temperiersystem 100 abgeleitet werden und das Temperiermedium unter Verwendung des zweiten Wärmetauschers 115 gegen das Kältemittel, insbesondere auf ein Temperaturniveau unterhalb der Temperatur der das Fahrzeug umgebenden Atmosphäre, weiter abgekühlt werden, um die Wärmeübertragung von der Batterie 110 auf das Temperiermedium zu erleichtern bzw. effizienter zu gestalten. Typischerweise wird daher der hier dargestellte zweite Betriebsmodus zur Kühlung der Batterie 110 verwendet. Der Fahrgastraum 140 kann dabei im Wesentlichen unabhängig von der Temperierung der Batterie 110 ebenfalls gekühlt (wie hier dargestellt) oder auch beheizt (in Figur 2 nicht dargestellt) werden.

In Figur 3 ist ein dritter Betriebsmodus des Temperiersystems 100 dargestellt, bei dem der erste Temperiermedienkreislauf 15 und der zweite Temperiermedienkreislauf 11 ebenfalls zu dem gemeinsamen Temperiermedienkreislauf 12 zusammengeschaltet sind. Im Vergleich zu dem zweiten Betriebsmodus (siehe Figur 2) ist hierbei jedoch eine andere Reihenfolge der Komponenten in dem gemeinsamen Temperiermedienkreislauf 12 realisiert, indem im Vergleich zu dem zweiten Betriebsmodus beide Vier-Wege-Ventile 117, 119 umgeschaltet sind. Daraus ergibt sich folgende Reihung der Komponenten: Antriebseinheit 120 → optional bzw. teilweise umgangener erster Wärmetauscher 125 --> Batterie 110 --> zweiter Wärmetauscher 115 --> Antriebseinheit 120. Der dritte Betriebsmodus kann insbesondere zur Beheizung der Batterie 110 unter Verwendung von durch die Antriebseinheit 120 bereitgestellter Wärme verwendet werden. Dabei ist wiederum der Kältemittelkreislauf 13 sowohl zum Beheizen des Fahrgastraums 140 (wie in Figur 3 dargestellt) als auch zum Kühlen des Fahrgastraums 140 (in Figur 3 nicht dargestellt) betreibbar. Insbesondere bei einer Nutzung des Kältemittelkreislaufs 13 zum Beheizen des Fahrgastraums 140 kann Restwärme aus dem gemeinsamen Temperiermedienkreislauf 12 über den zweiten Wärmetauscher 115 aufgenommen und mittels des Kompressors 132 auf ein für die Beheizung des Fahrgastraums 140 erforderliches Temperaturniveau gehoben werden.

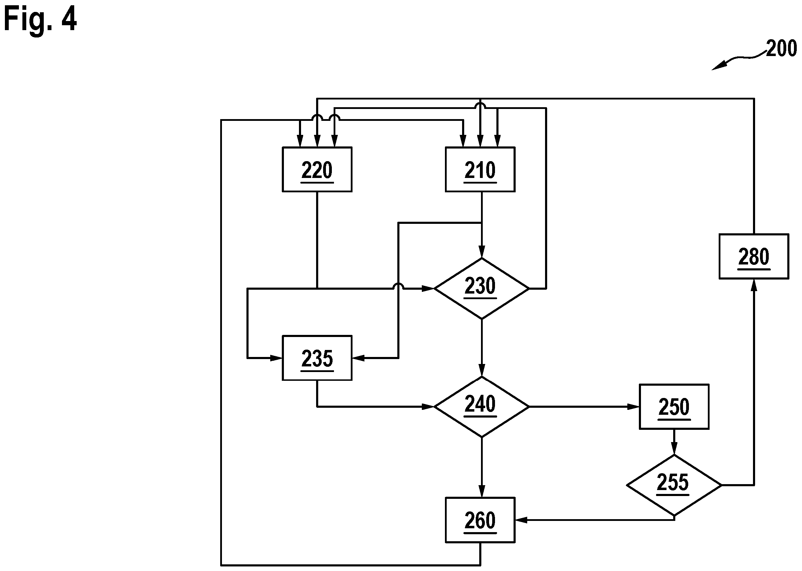

In Figur 4 ist eine Ausgestaltung eines erfindungsgemäßen Verfahrens schematisch in Form eines vereinfachten Ablaufdiagramms dargestellt und insgesamt mit 200 bezeichnet. Das Verfahren 200 kann beispielsweise dazu verwendet werden, das Temperiersystem 100 zu betreiben, ist jedoch nicht auf die spezifische Ausgestaltung des Temperiersystems 100 beschränkt. Vielmehr kann das Verfahren 200 mit beliebigen Temperiersystemen, die zumindest zwei miteinander zu einem gemeinsamen Temperiermedienkreislauf koppelbare Temperiermedienkreisläufe umfassen, verwendet werden. Im Folgenden wird das Verfahren 200 jedoch unter Bezugnahme auf das Ausführungsbeispiel des hier bereits erläuterten Temperiersystems 100 näher beschrieben.

Es wird davon ausgegangen, dass die beiden Temperiermedienkreisläufe 15, 11 zu Beginn des Verfahrens 200 voneinander getrennt sind bzw. betrieben werden, beispielsweise wie in Figur 1 gezeigt.

In einem Schritt 210 wird im Rahmen des Verfahrens 200 ein erster Temperierbedarf bezüglich der Antriebseinheit 120 ermittelt. Dazu kann beispielsweise eine aktuelle Temperatur der Antriebseinheit 120 ermittelt und mit einer Zieltemperatur der Antriebseinheit verglichen werden. Dabei kann ferner die thermische Masse bzw. Wärmekapazität der Antriebseinheit 120 berücksichtigt werden, um eine aus der Antriebseinheit 120 abzuführende Wärmemenge (bzw. ggf. auch eine der Antriebseinheit 120 zuzuführende Wärmemenge) zu ermitteln.

In einem Schritt 220 wird, im Wesentlichen analog zu Schritt 210, ein zweiter Temperierbedarf bezüglich der Batterie 110 ermittelt. Auch im Fall des zweiten Temperierbedarfs kann dazu eine aktuelle Temperatur der Batterie 110 ermittelt und mit einer Zieltemperatur der Batterie 110 verglichen werden. Eine thermische Masse bzw. Wärmekapazität der Batterie 110 kann berücksichtigt werden, um die zur Erreichung der Zieltemperatur erforderliche (positive oder negative) Wärmemenge zu ermitteln.

Temperaturen können im Rahmen des Verfahrens 200 teilweise oder vollständig sensorbasiert und/oder modellbasiert ermittelt werden.

Auf Grundlage der ermittelten Temperierbedarfe wird in einem Schritt 230 ermittelt, ob ein Zusammenschalten bzw. Kombinieren der getrennten Temperiermedienkreisläufe 15, 11 zu dem gemeinsamen Temperiermedienkreislauf 12 sinnvoll bzw. im Hinblick auf die Temperierung der Komponenten Antriebseinheit 120 bzw. Batterie 110 zielführend ist. Dazu werden die ermittelten Temperierbedarfe insbesondere dahingehend miteinander verglichen, ob der zweite Temperierbedarf zumindest teilweise unter zumindest teilweiser Bedienung des ersten Temperierbedarfs bedient werden kann. Mit anderen Worten wird im Rahmen des Schritts 230 ermittelt, ob sich die beiden Temperierbedarfe zumindest teilweise gegenseitig kompensieren lassen, d.h. ob die Temperierbedarfe durch Überführung von Wärme aus einem Temperiermedienkreislauf in den anderen Temperiermedienkreislauf zumindest teilweise erfüllbar sind. Ist dies nicht der Fall, kann das Verfahren zu den Schritten 210 bzw. 220 zurückkehren, um zu einem späteren Zeitpunkt ggf. zu einem anderen Ergebnis des Schritts 230 zu gelangen.

Wird hingegen in Schritt 230 ermittelt, dass eine Kopplung der Temperiermedienkreisläufe 15, 11 grundsätzlich günstig wäre, fährt das Verfahren mit einem Schritt 235 fort, in dem eine Differenz zwischen den aktuellen Temperaturen des ersten 15 und zweiten 11 Temperiermedienkreislaufs ermittelt wird. Dazu kann insbesondere die in den Schritten 210 und 220 ermittelte aktuelle Temperatur der Komponenten Antriebseinheit 120 bzw. Batterie 110 herangezogen werden.

In Schritt 240 wird die in Schritt 235 ermittelte Differenz mit einem Differenzschwellwert verglichen.

Liegt die ermittelte Differenz unterhalb des Differenzschwellwerts, fährt das Verfahren 200 mit einem Schritt 260 fort, in dem der erste Temperiermedienkreislauf 15 und zweite Temperiermedienkreislauf 11 zu dem gemeinsamen Temperiermedienkreislauf 12 zusammengeschaltet bzw. verbunden werden. Dazu kann insbesondere eines der Vier-Wege-Ventile 117, 119 umgeschaltet werden, um, insbesondere in Abhängigkeit von dem zweiten Temperierbedarf, einen Heizmodus (vgl. dritter Betriebsmodus; Figur 3) oder Kühlmodus (vgl. zweiter Betriebsmodus; Figur 2) in Bezug auf die Batterie 110 zu realisieren. Das Verfahren 200 kann nach der Kopplung 260 der zuvor getrennten Temperiermedienkreisläufe 15, 11 zu den Schritten 210, 220 zurückkehren, um das Temperiersystem 100 weiter thermisch zu überwachen.

Wird in Schritt 240 hingegen festgestellt, dass die in Schritt 235 ermittelte Differenz nicht kleiner als der Differenzschwellwert ist, so fährt das Verfahren 200 in dem gezeigten Beispiel mit einem Schritt 250 fort, in dem der erste Temperiermedienkreislauf 15 dazu gesteuert wird, seine Temperatur der aktuellen Temperatur des zweiten Temperiermedienkreislaufs 11 anzunähern. Dazu kann beispielsweise ein Aufteilungsverhältnis des Teilstroms des Temperiermediums, das den ersten Wärmetauscher 125 durchströmt, zu dem Teilstrom, der den ersten Wärmetauscher 125 umgeht, mittels des Ventils 123 geeignet eingestellt werden. Alternativ oder zusätzlich kann die Antriebseinheit 120 dazu gesteuert werden, mehr oder weniger Abwärme zu produzieren, sofern ein aktueller Betriebszustand des Fahrzeugs dies zulässt. Beispielsweise kann die Antriebseinheit 120 gezielt zu einer Wirkungsgradreduktion gesteuert werden, um die Temperatur des ersten Temperiermedienkreislaufs 15 zu erhöhen. Im Falle einer erforderlichen Temperatursenkung kann beispielsweise ein durch die Antriebseinheit 120 bereitstellbares Drehmoment zum Antrieb des Fahrzeugs gesenkt werden, um den Wärmeeintrag von der Antriebseinheit 120 in den ersten Temperiermedienkreislauf 15 zu begrenzen.

In einem Schritt 255 wird überprüft, ob die Angleichung der Temperaturen erfolgreich war, d.h. ob die Differenz der Temperaturen des ersten Temperiermedienkreislaufs 15 und des zweiten Temperiermedienkreislaufs 11 unter den Differenzschwellwert gesunken ist. Dazu kann nach Einleitung des Schritts 250 eine vorbestimmbare Zeitdauer abgewartet werden, bevor Schritt 255 durchgeführt wird, bzw. kann dazu Schritt 255 über eine vorbestimmbare Zeitdauer hinweg durchgeführt werden. Wird innerhalb dieser Zeitdauer eine ausreichende Angleichung der Temperaturen festgestellt, fährt das Verfahren 200 mit der Kopplung der beiden Temperiermedienkreisläufe 15, 11 (Schritt 260) fort.

Wird innerhalb der Zeitdauer jedoch keine ausreichende Angleichung der Temperaturen erreicht, fährt das Verfahren 200 in dem hier gezeigten Beispiel mit einem Schritt 280 fort, der einen Entprellschritt darstellt. Schritt 280 beinhaltet eine Sperrung des Verfahrens 200 während einer vorbestimmbaren Sperrdauer, bevor das Verfahren 200 zu den Schritten 210, 220 zurückkehrt. Wie bereits eingangs erläutert, kann durch einen derartigen Entprellschritt 280 Rechenkapazität eingespart werden.

Die Angleichung der Temperaturen der ersten 15 und zweiten 11 Temperiermedienkreisläufe verfolgt den Zweck einer Vermeidung thermischen Stresses, insbesondere in Bezug auf die Batterie 110. Bei zu hohen Temperaturdifferenzen zwischen Temperiermedium und zu temperierender Komponente (z.B. Batterie 110) können thermische Spannungen im Material der zu temperierenden Komponente auftreten, die die Lebensdauer bzw. Standzeit der betreffenden Komponente verringern bzw. deren Leistungsfähigkeit zeitweise oder dauerhaft beeinträchtigen können. Durch Anwendung des Verfahrens 200 können derartige Beeinträchtigungen vollständig oder zumindest teilweise verhindert bzw. reduziert werden. Durch geeignete Wahl des Differenzschwellwerts können die maximal zu erwartenden thermischen Spannungen einerseits und die Wahrscheinlichkeit bzw. zeitliche Ausdehnung eines gemeinsamen bzw. gekoppelten Betriebs der Temperiermedienkreisläufe 15, 11 andererseits beeinflusst bzw. bestimmt werden.

## Patentansprüche

1. Verfahren (200) zum Temperieren einer Antriebseinheit (120) und einer Batterie (110) eines zumindest teilweise elektrisch antreibbaren Fahrzeugs unter Verwendung eines Temperiersystems (100), das einen ersten Temperiermedienkreislauf (15), der die Antriebseinheit (120) umfasst, und einen zweiten Temperiermedienkreislauf (11), der die Batterie (110) umfasst, aufweist, wobei der erste (15) und der zweite (11) Temperiermedienkreislauf miteinander zu einem gemeinsamen Temperiermedienkreislauf (12) koppelbar sind, wobei das Verfahren (200) umfasst:
Ermitteln eines ersten Temperierbedarfs (210) bezüglich der Antriebseinheit (120),
Ermitteln eines zweiten Temperierbedarfs (220) bezüglich der Batterie (110) Vergleichen (230) des ersten Temperierbedarfs mit dem zweiten Temperierbedarf, und
Koppeln (260) des ersten Temperiermedienkreislauf (15) mit dem zweiten Temperiermedienkreislauf (11), um den gemeinsamen Temperiermedienkreislauf (12) zu bilden, in Abhängigkeit von einem Ergebnis des Vergleichs.

2. Verfahren (200) nach Anspruch 1, wobei das Vergleichen ein Ermitteln (230), ob der zweite Temperierbedarf zumindest teilweise unter zumindest teilweiser Bedienung des ersten Temperierbedarfs bedient werden kann, umfasst.

3. Verfahren (200) nach Anspruch 1 oder 2, wobei der zweite Temperierbedarf auf Basis einer aktuellen Temperatur der Batterie (110) und/oder auf Basis einer zur Erreichung einer Zieltemperatur der Batterie durch die Batterie aufzunehmenden oder abzugebenden erforderlichen Wärmemenge ermittelt wird und/oder
wobei der erste Temperierbedarf auf Basis einer aktuellen Temperatur der Antriebseinheit (120) und/oder auf Basis einer zur Erreichung einer Zieltemperatur der Antriebseinheit durch die Antriebseinheit aufzunehmenden oder abzugebenden erforderlichen Wärmemenge ermittelt wird.

4. Verfahren (200) nach einem der vorstehenden Ansprüche, wobei der erste Temperiermedienkreislauf (15) einen ersten Wärmetauscher (125) zum thermischen Austausch zwischen dem ersten Temperiermedienkreislauf (15) und einer das Fahrzeug umgebenden Atmosphäre umfasst.

5. Verfahren (200) nach einem der vorstehenden Ansprüche, wobei der zweite Temperiermedienkreislauf (11) einen zweiten Wärmetauscher (115) zum thermischen Austausch zwischen dem zweiten Temperiermedienkreislauf (11) und einem Kältemittelkreislauf (13) umfasst, wobei das Verfahren (200) ferner ein Betreiben des Kältemittelkreislaufs (13) zum Temperieren eines Fahrgastraums (140) des Fahrzeugs umfasst.

6. Verfahren (200) nach einem der vorstehenden Ansprüche, umfassend ein Ermitteln (235) einer Differenz zwischen einer aktuellen Temperatur des ersten Temperiermedienkreislaufs (15) und einer aktuellen Temperatur des zweiten Temperiermedienkreislaufs (11), ein Vergleichen der Differenz mit einem Differenzschwellwert (240), wobei das Koppeln (260) des ersten (15) mit dem zweiten (11) Temperiermedienkreislauf durchgeführt wird, wenn die Differenz kleiner als der Differenzschwellwert ist.

7. Verfahren (200) nach Anspruch 6, ferner umfassend ein Steuern (250) des ersten Temperiermedienkreislaufs (15) zum Angleichen von dessen aktueller Temperatur an die aktuelle Temperatur des zweiten Temperiermedienkreislaufs (11), wenn die Differenz größer als oder gleich groß wie der Differenzschwellwert ist.

8. Verfahren (200) nach Anspruch 7, ferner umfassend ein Überprüfen (255), nach dem Steuern (250) des ersten Temperiermedienkreislaufs (15) zum Angleichen von dessen aktueller Temperatur, ob die Differenz sich auf einen Wert unterhalb des Differenzschwellwerts verringert hat, und Durchführen einer Maßnahme (260, 280) in Abhängigkeit von einem Ergebnis des Überprüfens (255).

9. Recheneinheit, die dazu eingerichtet ist, alle Verfahrensschritte eines Verfahrens (200) nach einem der vorstehenden Ansprüche durchzuführen.

10. Temperiersystem (100), das zum Temperieren einer Antriebseinheit (120) und einer Batterie (110) eines zumindest teilweise elektrisch antreibbaren Fahrzeugs eingerichtet ist, umfassend einen ersten Temperiermedienkreislauf (15) und einen zweiten Temperiermedienkreislauf (11), wobei der erste Temperiermedienkreislauf (15) die Antriebseinheit (120) und einen ersten Wärmetauscher (125) zum thermischen Austausch zwischen dem ersten Temperiermedienkreislauf (15) und einer das Fahrzeug umgebenden Atmosphäre umfasst, wobei der zweite Temperiermedienkreislauf (11) die Batterie (110) und einen zweiten Wärmetauscher (115) zum Abführen von Wärme aus dem zweiten Temperiermedienkreislauf (11) umfasst, und wobei der erste Temperiermedienkreislauf (15) mit dem zweiten Temperiermedienkreislauf (11) koppelbar ist, um einen gemeinsamen Temperiermedienkreislauf (12) zu bilden.

11. Temperiersystem (100) nach Anspruch 10, umfassend zwei Vierwegeventile (117, 119), mittels derer der erste (15) und der zweite (11) Temperiermedienkreislauf miteinander zu dem gemeinsamen Temperiermedienkreislauf (12) koppelbar sind.

12. Temperiersystem (100) nach einem der Ansprüche 10 oder 11, das dazu eingerichtet ist, ein Verfahren (200) nach einem der Ansprüche 1 bis 8 durchzuführen, wobei das Temperiersystem (100) insbesondere eine Recheneinheit nach Anspruch 9 aufweist.

13. Computerprogramm, das eine Recheneinheit, insbesondere eines Temperiersystems nach Anspruch 12, dazu veranlasst, alle Verfahrensschritte eines Verfahrens (200) nach einem der Ansprüche 1 bis 8 durchzuführen, wenn es auf der Recheneinheit ausgeführt wird.

14. Maschinenlesbares Speichermedium mit einem darauf gespeicherten Computerprogramm nach Anspruch 13.
